# EUROPÄISCHE PATENTSCHRIFT

(11) **EP 3 343 178 B1**
(45) Veröffentlichungstag und Bekanntmachung des Hinweises auf die Patenterteilung: **07.08.2019**
(21) Anmeldenummer: 16206959.5
(22) Anmeldetag: 27.12.2016
(51) Int. Cl.: G01C 21/36

(54) **FAHRERASSISTENZSYSTEM, COMPUTERPROGRAMMPRODUKT, SIGNALFOLGE, FORTBEWEGUNGSMITTEL UND VERFAHREN ZUR INFORMATION EINES ANWENDERS EINES FORTBEWEGUNGSMITTELS**
DRIVER ASSISTANCE SYSTEM, COMPUTER PROGRAM PRODUCT, SIGNAL SEQUENCE, VEHICLE AND METHOD FOR PROVIDING INFORMATION TO A USER OF A VEHICLE
SYSTÈME D'ASSISTANCE AU CONDUCTEUR, PRODUIT D'UN PROGRAMME INFORMATIQUE, SÉQUENCE DE SIGNAUX, VEHICULE ET PROCÉDÉ DESTINÉ À INFORMER UN UTILISATEUR D'UN VEHICULE

(43) Veröffentlichungstag der Anmeldung: 04.07.2018
(73) Patentinhaber: Volkswagen AG, 38440 Wolfsburg (DE)
(72) Erfinder: Kassner, Astrid, 10117 Berlin (DE); Cullmann, Jacqueline, 38114 Braunschweig (DE); Kötter, Nils, 38118 Braunschweig (DE)
(74) Vertreter: Hoefer & Partner Patentanwälte mbB

(56) Entgegenhaltungen:
- EP-A1- 2 793 193
- EP-A1- 2 899 506
- EP-A1- 2 919 057
- DE-A1-102011 082 606
- DE-A1-102013 016 244
- DE-A1-102013 016 249

## Beschreibung

Die vorliegende Erfindung betrifft ein Fahrerassistenzsystem, ein Computerprogrammprodukt, eine Signalfolge, ein Fortbewegungsmittel sowie ein Verfahren zur Information eines Anwenders eines Fortbewegungsmittels. Insbesondere betrifft die vorliegende Erfindung eine intuitiv verständliche und daher wenig interpretationsbedürftige Ankündigung eines Points of Interest (POI).

Zahlreiche fahrtrelevante Informationen, wie POI, werden klassischerweise in der Navigationskarte in einem Head-down-display angezeigt und/oder per Adresse auf einem Bildschirm wiedergegeben. Dieses erfordert neben einer Blickabwendung von der Straße, dass der Fahrer sich in der Karte orientierten und diese Orientierung auf die reale Umwelt übertragen muss oder bei einer Anzeige der Adresse diese anhand von Straßenschildern und Hausnummern in der Umwelt suchen muss. Es ist eine Aufgabe der vorliegenden Erfindung, die im Stand der Technik bekannten Nachteile auszuräumen bzw. zu lindern, sodass eine bessere Interpretierbarkeit und ein höherer Komfort beim Ablesen/Erfassen von Informationen bezüglich POI in der Umgebung eines Fortbewegungsmittels erreicht wird.

EP 2 899 506 A1 und DE 10 2013 016 249 A1 offenbaren Verfahren und Vorrichtungen zur kontaktanalogen Darstellung von Navigationshinweisen in einer Ebene der Fahrbahnoberfläche, welche einem Fortbewegungsmittel vorausliegt. Insbesondere Pfeildarstellungen weisen dem Anwender die Richtung entlang einer vorab definierten Route. DE 10 2011 082606 A1 offenbart ein Verfahren zur Anzeige eines Richtungsweisers zur nicht-kontaktanalogen virtuellen Darstellung eines Statusinformationsfeldes, welches beispielsweise einen Betriebszustand des Fahrzeugs, beispielsweise eine aktuelle Geschwindigkeit des Fahrzeugs, anzeigt.

DE 10 2013 016 244 A1 offenbart ein Verfahren und eine Vorrichtung zur augmentierten Darstellung mindestens einer Zusatzinformation in einer Fahrzeugumgebung, wobei mehrere darzustellende Zusatzinformationen zu mindestens einer Gruppe zusammengefasst werden. Die vorstehend genannte Aufgabe wird erfindungsgemäß durch ein Verfahren zur Information eines Anwenders eines Fortbewegungsmittels gelöst. Der Anwender kann beispielsweise ein Fahrer, Beifahrer, Passagier des Fortbewegungsmittels sein. Das Fortbewegungsmittel kann beispielsweise ein Pkw, Transporter, Lkw, Motorrad, Luft- und/oder Wasserfahrzeug sein. In einem ersten Schritt wird ein Point of Interest (POI) ermittelt. Hierzu kann eine vordefinierte Entfernung vom Fortbewegungsmittel unterschritten werden. Optional
kann der Anwender auch bestimmte Kategorien von POI in erfindungsgemäßer Art und Weise anzuzeigen wünschen. Anschließend wird ein virtuell in einer Ebene der Straßenoberfläche liegender Hinweis auf die Nähe zum POI an den Anwender ausgegeben. Dies erfolgt mittels einer Anzeigeeinrichtung des Fortbewegungsmittels. Die Anzeigeeinrichtung kann eine optische Anzeigeeinrichtung sein. Insbesondere kann die Anzeigeeinrichtung ein Head-up-display umfassen. Der Hinweis kann einen virtuellen, festen Abstand vom Fortbewegungsmittel aufweisen. Mit anderen Worten "schiebt" das Fortbewegungsmittel den Hinweis auf der Straßenoberfläche vor sich her. Eine Abwendung eines Blickes auf ein zentrales Informationsdisplay, ein Kombiinstrument oder ein anderes Head-down-display ist somit nicht mehr erforderlich. Der Fahrer erhält, während sein Blick auf das Straßengeschehen gerichtet bleibt, einen Hinweis über die aktuelle Nähe zum POI. Auf diese Weise kann das Ablenkungspotenzial bei einer Anzeige eines POI verringert und die Verkehrssicherheit eines entsprechend ausgestalteten Fortbewegungsmittels erhöht werden.

Die Unteransprüche zeigen bevorzugte Weiterbildungen der Erfindung. Der Hinweis kann beispielsweise ein Sinnbild ("Icon") umfassen. Das Sinnbild kann in einem Kreissymbol angeordnet sein, welches aufgrund der virtuell in der Straßenoberflächenebene liegend eine perspektivische Verzerrung aufweisen kann. Auf diese Weise kann der Hinweis für den POI einen hohen Wiedererkennungswert aufweisen, obwohl die Kategorie des POI durch das Sinnbild intuitiv erkennbar ist.

Um die Erkennbarkeit des Hinweises weiter zu verbessern, kann eine aktuelle Reisegeschwindigkeit des Fortbewegungsmittels (z. B. von einem Bus des Informationsbordnetzes) ermittelt und die Art und Weise der Darstellung des Hinweises in Abhängigkeit der Reisegeschwindigkeit variiert werden. Beispielsweise kann in Abhängigkeit der Reisegeschwindigkeit eine Wegstrecke bzw. eine Zeitdauer vor dem Erreichen des POI vergrößert werden bis zum Durchfahren bzw. zum Ablauf, welcher der POI fortwährend in erfindungsgemäßer Weise angezeigt wird. Somit verbleibt dem Anwender stets hinreichend Zeit/Wegstrecke bis zum Einleiten eines Manövers für den Fall, dass er den POI ansteuern möchte.

Weiteren Aufschluss über die Position des POI kann ein Zeiger im Bereich des Hinweises geben, welcher, ausgehend vom Hinweis/vom Fortbewegungsmittel, in Richtung der realen Position des POI weist. Der Zeiger kann beispielsweise als Kreisbogensegment ausgestaltet sein, welches sich um einen das Icon des Hinweises ohnehin umgebenden Kreis schmiegt. Das Kreisbogensegment kann entsprechend einer Pfeilspitze an derjenigen Position des Hinweises angeordnet sein, welche dem POI optisch nächstgelegen ist. Alternativ oder zusätzlich zum Kreisbogensegment kann die Umrandung/der Kreis des Hinweises eine Tropfenform aufweisen, wobei der spitz zulaufende Abschnitt des Tropfens in Richtung des POI weist. Es ergeben sich hierbei unterschiedliche Ausgestaltungen, auf welche nachfolgend eingegangen wird.

Die Länge des Zeigers kann in Abhängigkeit einer Entfernung des Fortbewegungsmittels vom POI angepasst werden. Beispielsweise kann die Länge des Zeigers eine maximale Strecke bis zum Mittelpunkt des Hinweises kennzeichnen. Je länger die Entfernung bis zum POI ist, desto länger oder kürzer kann der Zeiger sein. Mit anderen Worten kann sich der Zeiger in Richtung des POI strecken, wenn dieser näherkommt oder sich vom Fortbewegungsmittel entfernt.

Eine ähnliche Variation des Hinweises kann sich durch die Änderung einer Farbe (zumindest eines Teils) des Hinweises in Abhängigkeit einer Entfernung des Fortbewegungsmittels vom POI ergeben. Auf diese Weise kann dem Anwender eine zusätzliche/alternative Orientierung zur relativen Position des POI bezüglich des Fortbewegungsmittels gegeben werden, ohne dass dieser einen Zahlenwert und/oder einen Hinweis in Textform interpretieren muss. Insbesondere für Autovermietungen kann dies einen Vorteil darstellen, da ihre Kunden aus einer großen Zahl unterschiedlicher Sprachräume stammen.

Um die Übersichtlichkeit der erfindungsgemäßen Anzeige zu wahren, kann vorgesehen sein, dass ab einer vordefinierten Anzahl auszugebender Hinweise auf POI die Sinnbilder für die einzelnen Einrichtungen innerhalb eines gemeinsamen Kreissymbols gesammelt werden. Dies kann insbesondere dann sinnvoll sein, wenn sich die POI in einer ähnlichen Entfernung und/oder in einer ähnlichen Himmelsrichtung bezüglich des Fortbewegungsmittels befindet. Auf diese Weise sind auch eine Richtungsangabe und/oder eine Entfernungsangabe bezüglich der im Hinweis repräsentierten POI im Wesentlichen identisch. Eine solche Zusammenfassung kann beispielsweise bei einer Ankündigung von Autohöfen sinnvoll sein, an welchen üblicherweise eine Vielzahl von Waren und Dienstleistungen angeboten werden, welche durch jeweilige Sinnbilder besonders intuitiv angekündigt werden können. Sobald das Fortbewegungsmittel der Vielzahl von POI so nahe gekommen ist, dass die einzelnen POI in hinreichend unterschiedlichen Himmelsrichtungen und/oder Entfernungen gelegen sind, kann der bisherig ausgegebene gemeinsame Hinweis in einzelne Hinweise "zerfallen", wobei jeweilige Richtungen und Entfernungen durch einen jeweiligen Zeiger des jeweiligen Hinweises repräsentiert werden. Entsprechendes kann im umgekehrten Fall erfolgen, dass sich das Fortbewegungsmittel von der Ansammlung unterschiedlicher POI entfernt und eine Zusammenfassung der Hinweise hinsichtlich Richtung und Entfernung keine unangebrachte Erübrigung von Informationen mit sich bringt.

Gemäß einem zweiten Aspekt der vorliegenden Erfindung wird ein Fahrerassistenzsystem zur Information eines Anwenders eines Fortbewegungsmittels vorgeschlagen. Es umfasst einen Dateneingang (z. B. eine Antenne, ein Bussystem o. ä.), eine Auswerteeinheit (ein elektronisches Steuergerät, einen programmierbaren Prozessor, einen Mikrocontroller o. ä.) und einen Datenausgang (eine Anzeigeeinrichtung, ein Bussystem, ein Head-up-display o. ä.). Die Auswerteeinheit ist eingerichtet, mittels des Dateneingangs ein Point of Interest (POI) zu ermitteln. Mittels des Datenausgangs ist die Auswerteeinheit eingerichtet, einen virtuell in einer Ebene der Straßenoberfläche liegenden Hinweis auf die Nähe des Fortbewegungsmittels zu POI an den Anwender auszugeben. Dies erfolgt mittels einer Anzeigeeinrichtung des Fortbewegungsmittels, welche informationstechnisch mit dem Datenausgang verknüpft ist. Auf diese Weise ergeben sich die Merkmale, Merkmalskombinationen und Vorteile des erfindungsgemäßen Fahrerassistenzsystems derart ersichtlich entsprechend denjenigen des erfindungsgemäßen Verfahrens, dass zur Vermeidung von Wiederholungen auf die obigen Ausführungen verwiesen wird.

Gemäß einem dritten Aspekt der vorliegenden Erfindung wird ein Computerprogrammprodukt vorgeschlagen, welches Instruktionen aufweist, welche, wenn sie auf einer Auswerteeinheit eines erfindungsgemäßen Fahrerassistenzsystems ausgeführt werden, das Fahrerassistenzsystem veranlassen, die Schritte eines erfindungsgemäßen Verfahrens auszuführen. Das Computerprogrammprodukt kann aus CD, DVD, Flash-Speicher, Blu-ray-Disc, RAM/ROM, Cache o. ä. ausgestaltet sein.

Gemäß einem vierten Aspekt der vorliegenden Erfindung wird eine Signalfolge vorgeschlagen, welche Instruktionen repräsentiert, welche, wenn sie auf einer Auswerteeinheit eines erfindungsgemäßen Fahrerassistenzsystems ausgeführt werden, das Fahrerassistenzsystem veranlassen, die Schritte eines erfindungsgemäßen Verfahrens auszuführen. Durch die Signalfolge werden die Instruktionen auch für den Fall unter Schutz gestellt, dass die zu ihrer Bereitstellung erforderlichen Datenspeicher außerhalb des Geltungsbereiches der beigefügten Ansprüche gelegen sind.

Gemäß einem fünften Aspekt der vorliegenden Erfindung wird ein Fortbewegungsmittel (ein Pkw, Transporter, Lkw, Motorrad, Luft- und/oder Wasserfahrzeug) vorgeschlagen, welches ein Fahrerassistenzsystem gemäß dem zweitgenannten Erfindungsaspekt aufweist. Auch bezüglich der Merkmale, Merkmalskombinationen und Vorteile des erfindungsgemäßen Fortbewegungsmittels wird auf die obigen Ausführungen verwiesen.

Die augmentierte Darstellung des POI gemäß der vorliegenden Erfindung direkt in der Umgebung des Fortbewegungsmittels erleichtert den Prozess der Erfassung der im Hinweis enthaltenen Informationen, da durch die Verdeutlichung des POI in der Umwelt der Fahrer einen direkten Bezug zu dessen Position und Route herstellen kann. Die vorliegende Erfindungsmeldung beschreibt gemäß einem Aspekt die Augmentierung von POI mit einem Head-up-display, dessen Sichtfeld bei einer Projektionsdistanz von 7,50 m bei 1,30 m Breite liegt und damit innerhalb der eigenen Fahrspur begrenzt ist. Eine Überlagerung von POI seitlich der Fahrspur ist daher nicht möglich. Ein Kerngedanke der vorliegenden Erfindung besteht daher darin, die Existenz eines POI am seitlichen Fahrspurrand durch eine Repräsentanz auf der Fahrspur anzuzeigen und zusätzlich eine Verortung des POI in der Umwelt anzuzeigen. Beispielsweise kann ein an der Straße befindliches Restaurant rechtzeitig vor dem Passieren einer Einfahrt des Restaurants durch ein geeignetes auf die Fahrspur gelegtes Symbol repräsentiert werden. Denkbar sind Ergänzungen des Symbols, um den Namen oder weitere Informationen, wie Speisegenre und/oder Anbieter. Zusätzlich kann eine Verortung dieses POI relativ zum Fahrzeug angezeigt werden. Beispielsweise kann ein während der Fahrt umlaufender Balken (wechselnder Farbe) oder ein Pfeil die relative Position des POI anzeigen. Der POI ist daher vom Fahrer bereits beim Annähern an seine Position kontinuierlich sichtbar. Der Beginn der Anzeige kann geschwindigkeitsabhängig gewählt werden, da bei höheren Geschwindigkeiten ein schnelleres Erreichen des betreffenden Straßenabschnitts erfolgt und daher eine frühere Reaktion des Anwenders erforderlich und hierzu eine frühere Anzeige wünschenswert ist.

Nachfolgend werden Ausführungsbeispiele der vorliegenden Erfindung unter Bezugnahme auf die beigefügten Zeichnungen beschrieben. Es zeigen:
- Figur 1: eine schematische Darstellung eines Ausführungsbeispiels eines erfindungsgemäßen Fortbewegungsmittels mit einem Ausführungsbeispiel eines erfindungsgemäßen Fahrerassistenzsystems;
- Figur 2 - 7: Ansichten einer Fahrzeugumgebung in einer erfindungsgemäß augmentierten Perspektive eines Fahrers; und
- Figur 8: ein Flussdiagramm veranschaulichend Schritte eines Ausführungsbeispiels eines erfindungsgemäßen Verfahrens zur Information eines Anwenders eines Fortbewegungsmittels.

### Ausführungsformen der Erfindung

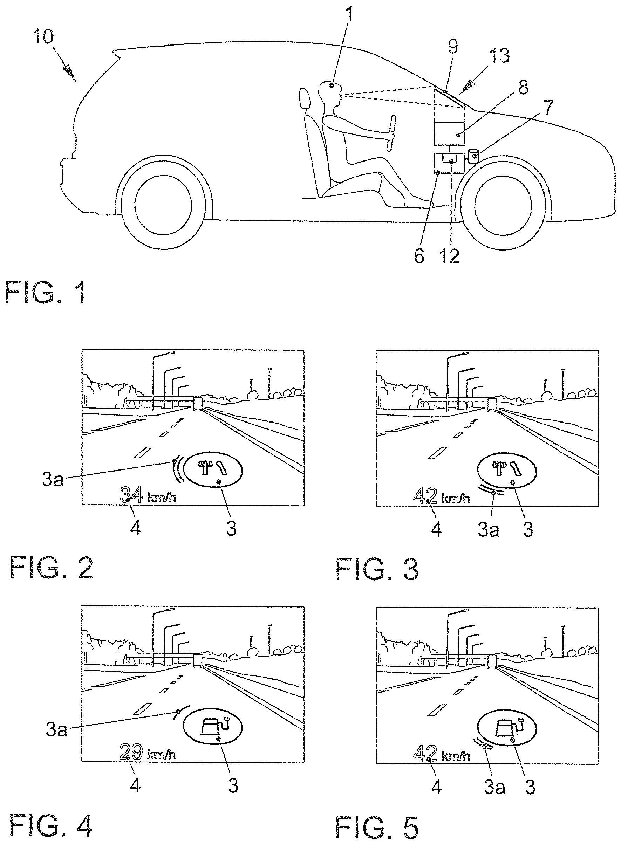

Figur 1 zeigt einen Pkw 10 als Fortbewegungsmittel, in welchem ein Anwender 1 ein Head-up-display 13 zur Erlangung von Informationen bezüglich des Fahrzustandes des Fortbewegungsmittels, bezüglich Navigationshinweisen und erfindungsgemäßen Informationen über Points of Interest erhält. In einem Datenspeicher 7 sind Instruktionen enthalten, welche ein elektronisches Steuergerät 6 als Auswerteeinheit in die Lage versetzen, ein erfindungsgemäßes Verfahren auszuführen. Zudem sind Bilddateien enthalten, mittels welchen die erfindungsgemäßen, virtuell in einer Ebene der Straßenoberfläche liegenden Hinweise mittels des Head-up-displays 13 (aufweisend einen Projektor 8 und eine semi-transparente Folie 9) angezeigt werden können. Hierzu ist das elektronische Steuergerät 6 über einen Datenausgang 12 mit dem Projektor 8 informationstechnisch verbunden.

Figur 2 zeigt eine Perspektive auf einer Umgebung eines erfindungsgemäß ausgestalteten Fortbewegungsmittels, welches sich in etwa auf Höhe eines POI (ein Restaurant) befindet. Der Hinweis 3 umfasst ein von einem Kreis umfasstes Sinnbild (Gabel und Messer), welches für Restaurantdienstleistungen steht. Zwei zum gemeinsamen Kreismittelpunkt des Hinweises 3 konzentrisch liegende Kreissegmente 3 a sind als Zeiger in etwa auf der 9-Uhr-Position des Hinweises 3 angeordnet und zeigen an, dass das Fortbewegungsmittel links abbiegen müsste, um den POI anzufahren. Die aktuelle Reisegeschwindigkeit des Fortbewegungsmittels (34 km/h) wird durch einen in herkömmlicher Weise ausgestalteten Hinweis 4 im Head-up-display des Fortbewegungsmittels angezeigt.

Figur 3 zeigt die in Figur 2 gezeigte Situation, nachdem das Fortbewegungsmittel ein POI passiert hat. Die Kreissegmente 3 a als Zeiger sind in etwa auf die Halb-acht-Position des Hinweises 3 gerutscht. Die Reisegeschwindigkeit des Fortbewegungsmittels hat sich auf 42 km pro Stunde erhöht, was durch einen in herkömmlicher Weise ausgestalteten Hinweis 4 im Head-up-display dargestellt wird.

Figur 4 zeigt eine Ansicht einer Umgebung eines Fortbewegungsmittels, welche sich in der Nähe einer elektrischen Ladestation für elektrisch antreibbare Fortbewegungsmittel als POI aufhält. Entsprechend ist der erfindungsgemäß virtuell in einer Ebene der Straßenoberfläche liegende Hinweis 3 durch ein Zapfsäulensymbol mit einem elektrischen Ladestecker und einem das Zapfsäulensymbol umgebenden Kreis gebildet. In etwa auf der 10-Uhr-Position ist ein Kreisbogensegment 3 a als Zeiger in Richtung der elektrischen Ladestation angeordnet. Da die Ladestation noch recht weit entfernt ist, ist lediglich ein Kreisbogensegment 3 a sichtbar. Die aktuelle Reisegeschwindigkeit (29 km/h) des Fortbewegungsmittels wird durch einen in herkömmlicher Weise ausgestalteten Hinweis 4 im Head-up-display des Fortbewegungsmittels angezeigt.

Figur 5 zeigt eine sich an die in Figur 4 dargestellte Fahrsituation anschließende Ansicht einer Fahrzeugumgebung, nachdem das Fortbewegungsmittel eine Entfernung zur Ladestation verringert, sie jedoch bereits passiert hat. Zwei Kreisbogensegmente 3 a zeigen die geringere Entfernung zur Ladestation an. Indem sie jedoch auf die Halb-acht-Position verrutscht sind, erhält der Anwender den Hinweis, dass er die Ladestation bereits passiert hat.

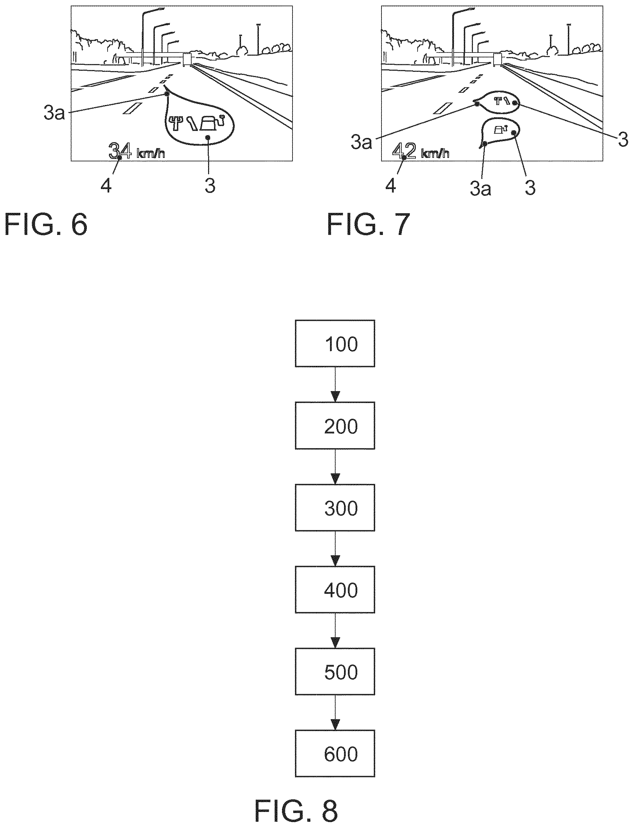

Figur 6 zeigt einen Blick auf eine Umgebung eines erfindungsgemäß ausgestalteten Fortbewegungsmittels aus Sicht des Fahrers, in dessen Nähe mehrere POI (ein Restaurant und eine elektrische Ladestation) angeordnet sind. Aus der aktuellen geografischen Position des Fortbewegungsmittels betrachtet, liegen beide POI in einer entsprechenden Himmelsrichtung. Daher wurden die die beiden POI repräsentierenden Icons (Gabel und Messer, Ladesäule) in einem gemeinsamen Hinweis 3 zusammengefasst. Eine Tropfenform umgibt beide Icons und der spitz zulaufende Teil der Tropfenform weist in die 10-Uhr-Position, in welcher das Restaurant und die Ladestation gelegen sind.

Figur 7 zeigt die in Figur 6 dargestellte Ansicht, nachdem sich das Fortbewegungsmittel in eine andere geografische Position bezüglich der Ladestation und des Restaurants begeben hat. Aus der aktuellen Position (näher und zwischen den POI gelegen) sind die POI in derart unterschiedliche Himmelsrichtungen gelegen, dass eine Zusammenfassung, wie in Figur 6, keine hinreichend genaue Wiedergabe der Himmelsrichtungen ermöglicht. Entsprechend werden die Hinweise 3 auf die POI automatisch aufgeteilt und jeweilige Tropfenformen, welche die Sinnbilder für die Ladesäule und das Restaurant umgeben, weisen mit ihren spitz zulaufenden Bereichen 3 a als Zeiger in die 9-Uhr-Position bzw. die 7-Uhr-Position.

Figur 8 zeigt Schritte eines Ausführungsbeispiels eines erfindungsgemäßen Verfahrens zur Information eines Anwenders eines Fortbewegungsmittels. In Schritt 100 wird ein Point of Interest (POI) in der Nähe des Fortbewegungsmittels ermittelt. Dies erfolgt anhand eines Kartenmaterials in einem lokalen Speicher des Fortbewegungsmittels sowie anhand einer satellitenbasierten Ortung. In Schritt 200 wird eine aktuelle Reisegeschwindigkeit des Fortbewegungsmittels ermittelt. In Abhängigkeit der Reisegeschwindigkeit ist ein Hinweis auf die Lage des POI bereits ab Erreichen eines größeren Abstandes zum POI auszugehen als bei einer niedrigeren Reisegeschwindigkeit. Entsprechend wird in Schritt 300 der Hinweis in Abhängigkeit der Reisegeschwindigkeit als virtuell in einer Ebene der Straßenoberfläche liegender Hinweis auf die Nähe zum POI an den Anwender mittels eines Head-up-displays des Fortbewegungsmittels ausgegeben. In Schritt 400 wird ein Zeiger im Bereich des Hinweises angezeigt und in Schritt hinsichtlich seiner Position an einem der hinweisumgebenden Kreise modifiziert, um Aufschluss auf eine Himmelsrichtung zu geben, in welcher der POI aktuell gelegen ist. In Schritt 500 wird im Ansprechen auf das Herannahen an den POI ein Schweif einer Tropfenform, welche den Hinweis einhüllt, verlängert. Dies geschieht entsprechend einer virtuellen Anziehungskraft, welche für den Tropfen in Richtung des POI wirkt und sich mit geringerer Entfernung vergrößert. In Schritt 600 wird schließlich der Schweif des Tropfens im Zuge einer Annäherung an den POI von blau auf rot umgefärbt, um die unmittelbare Nähe zum POI zu veranschaulichen.

### Bezugszeichenliste

- 1: Anwender
- 3: Hinweis
- 3 a: Zeiger
- 4: Anzeige
- 6: elektronisches Steuergerät
- 7: Datenspeicher
- 8: Projektor
- 9: Semi-transparente Folie
- 10: Pkw
- 12: Datenausgang
- 13: Head-up-display
- 100 - 600: Verfahrensschritte

## Patentansprüche

1. Verfahren zur Information eines Anwenders (1) eines Fortbewegungsmittels (10) umfassend die Schritte:
- Ermitteln (100) eines Points of Interest, nachfolgend "POI" genannt, und
- Ausgeben eines virtuell in einer Ebene der Straßenoberfläche liegenden Hinweises (3) auf die Nähe zum POI an den Anwender (1) mittels einer Anzeigeeinrichtung (13) des Fortbewegungsmittels (10).

2. Verfahren nach Anspruch 1, wobei die Anzeigeeinrichtung (13) ein Head-up Display umfasst.

3. Verfahren nach Anspruch 1 oder 2, wobei der Hinweis (3) ein Sinnbild umfasst.

4. Verfahren nach einem der vorstehenden Ansprüche weiter umfassend:
- Ermitteln (200) einer aktuellen Reisegeschwindigkeit des Fortbewegungsmittels (10) und
- Ausgeben (300) des Hinweises (3) eine
- in Abhängigkeit der Reisegeschwindigkeit bestimmte Wegstrecke oder
- Zeitdauer
vor dem Erreichen des POI.

5. Verfahren nach einem der vorstehenden Ansprüche weiter umfassend
- Ausgeben (400) eines Zeigers (3a) im Bereich des Hinweises (3), welcher Aufschluss auf eine Himmelsrichtung gibt, in welcher der POI gelegen ist.

6. Verfahren nach Anspruch 5, wobei der Zeiger (3a)
- als konzentrisch zu einem Mittelpunkt des Hinweises (3) angeordneter Kreisbogenabschnitt ausgestaltet ist und/oder
- als tropfenförmige Umrandung eines Symbols des Hinweises (3) in Richtung des POI weist.

7. Verfahren nach einem der vorstehenden Ansprüche 5 oder 6 weiter umfassend:
- Ändern (500) einer Länge des Zeigers (3a) gemessen von einem Mittelpunkt des Hinweises (3) in Abhängigkeit einer Entfernung des Fortbewegungsmittels (10) vom POI.

8. Verfahren nach einem der vorstehenden Ansprüche weiter umfassend
- Ändern (600) einer Farbe des Hinweises (3) in Abhängigkeit einer Entfernung des Fortbewegungsmittels (10) vom POI.

9. Verfahren nach einem der vorstehenden Ansprüche weiter umfassend
- Ermitteln einer Vielzahl POI und Ausgeben eines gemeinsamen Hinweises (3) auf mehrere POI, sofern
- eine vordefinierte Vielzahl POI in vordefinierter Nähe des Fortbewegungsmittels (10) erreicht ist und/oder
- die POI in einander hinreichend übereinstimmenden Himmelsrichtungen bezüglich des Fortbewegungsmittels (10) gelegen sind.

10. Fahrerassistenzsystem zur Information eines Anwenders (1) eines Fortbewegungsmittels (10) umfassend
- einen Dateneingang (11),
- eine Auswerteeinheit (8) und
- einen Datenausgang (12), wobei
- die Auswerteeinheit (8) eingerichtet ist,
- mittels des Dateneingangs (11) einen Point of Interest, nachfolgend "POI" genannt, zu ermitteln und
- mittels des Datenausgangs (12) einen virtuell in einer Ebene der Straßenoberfläche liegenden Hinweis (3) auf die Nähe zum POI an den Anwender (1) mittels einer Anzeigeeinrichtung (13) des Fortbewegungsmittels (10) auszugeben.

11. Fahrerassistenzsystem nach Anspruch 10, welches eingerichtet ist, ein Verfahren nach einem der vorstehenden Ansprüche 1 bis 9 auszuführen.

12. Computerprogrammprodukt umfassend Instruktionen, welche, wenn Sie auf einem programmierbaren Prozessor (8) eines Fahrerassistenzsystems (13) nach einem der Ansprüche 10 oder 11 ausgeführt werden, den Prozessor (8) veranlassen, die Schritte eines Verfahrens nach einem der Ansprüche 1 bis 9 durchzuführen.

13. Signalfolge repräsentierend Instruktionen, welche, wenn sie auf einem programmierbaren Prozessor (8) eines Fahrerassistenzsystems (13) nach einem der Ansprüche 10 oder 11 ausgeführt werden, den Prozessor (8) veranlassen, die Schritte eines Verfahrens nach einem der Ansprüche 1 bis 9 durchzuführen.

14. Fortbewegungsmittel umfassend ein Fahrerassistenzsystem (13) nach einem der vorstehenden Ansprüche 10 oder 11.

## Claims

1. Method for providing information to a user (1) of a means of transport (10), comprising the steps of:
- determining (100) a point of interest ('POI') and
- issuing to the user (1), by means of a display device (13) of the means of transport (10) a notification (3) positioned virtually on one level of the road surface that indicates that the POI is nearby.

2. Method according to claim 1, wherein the display device (13) comprises a head-up display.

3. Method according to claim 1 or 2, wherein the notification (3) comprises a symbol.

4. Method according to any of the foregoing claims, further comprising:
- determining (200) a current speed of travel of the means of transport (10) and
- issuing (300) the notification (3) at a distance or an amount of time, depending on the speed of travel, before the POI will be reached.

5. Method according to any of the foregoing claims, further comprising:
issuing (400) a pointer (3a) in the area of the notification (3) indicating a compass direction in which the POI is located.

6. Method according to claim 5, wherein the pointer (3a)
is configured as a section of a circular arc that is arranged concentrically with a centre of the notification (3), and/or
points in the direction of the POI as a teardrop-shaped border around a symbol in the notification (3).

7. Method according to any of the foregoing claims 5 or 6, further comprising:
modifying (500) a length of the pointer (3a) measured from a centre of the notification (3) depending on a distance between the means of transport (10) and the POI.

8. Method according to any of the foregoing claims, further comprising:
changing (600) a colour of the notification (3) depending on a distance between the means of transport (10) and the POI.

9. Method according to any of the foregoing claims, further comprising:
determining a plurality of POIs and issuing a combined notification (3) of multiple POIs, to the extent that
the means of transport (10) has come within a predefined distance near a predefined plurality of POIs, and/or
the POIs are located in compass directions relative to the means of transport (10) that are sufficiently similar to one another.

10. Driver assistance system for providing information to a user (1) of a means of transport (10), comprising:
a data input (11),
an analysis unit (8), and
a data output (12), wherein the analysis unit (8) is configured
to determine a point of interest ('POI') by means of the data input (11), and
by means of the data output (12), to issue to the user (1), by means of a display device (13) of the means of transport (10) a notification (3) positioned virtually on one level of the road surface that indicates that the POI is nearby.

11. Driver assistance system according to claim 10, which is configured to execute a method according to any of the foregoing claims 1 - 9.

12. Computer program product, comprising instructions that, when executed on a programmable processor (8) of a driver assistance system (13) according to either of claims 10 or 11, cause the processor (8) to execute the steps of a method according to any of claims 1 - 9.

13. Sequence of signals, representing instructions that, when executed on a programmable processor (8) of a driver assistance system (13) according to either of claims 10 or 11, cause the processor (8) to execute the steps of a method according to any of claims 1 - 9.

14. Means of transport, comprising a driver assistance system (13) according to either of the foregoing claims 10 or 11.

## Revendications

1. Procédé destiné à informer un utilisateur (1) d'un moyen de locomotion (10), comprenant les étapes :
- détermination (100) d'un point d'intérêt, appelé ci-dessous «POI», et
- fourniture à l'utilisateur (1), au moyen d'un équipement d'affichage (13) du moyen de locomotion (10), d'une indication (3) située virtuellement dans un plan de la surface de la route et concernant la proximité au POI.

2. Procédé selon la revendication 1, l'équipement d'affichage (13) comprenant un affichage tête haute.

3. Procédé selon la revendication 1 ou 2, l'indication (3) comprenant un pictogramme.

4. Procédé selon l'une des revendications précédentes, comprenant en outre :
- la détermination (200) d'une vitesse de déplacement actuelle du moyen de locomotion (10) et
- la fourniture (300) de l'indication (3) concernant
- un parcours défini en fonction de la vitesse de déplacement ou
- une durée
avant d'atteindre le POI.

5. Procédé selon l'une des revendications précédentes, comprenant en outre :
- la fourniture (400) d'un pointeur (3a) dans la zone de l'indication (3) qui fournit des renseignements sur un point cardinal dans lequel est placé le POI.

6. Procédé selon la revendication 5, le pointeur (3a)
- étant constitué en tant que tronçon d'arc de cercle disposé de façon concentrique à un point central de l'indication (3) et
- étant dirigé en direction du POI en tant qu'encadrement en forme de goutte d'un symbole de l'indication (3).

7. Procédé selon l'une des revendications précédentes 5 ou 6, comprenant en outre :
- la modification (500) d'une longueur du pointeur (3a) mesurée à partir d'un point central de l'indication (3) en fonction d'une distance entre le moyen de locomotion (10) et le POI.

8. Procédé selon l'une des revendications précédentes, comprenant en outre :
- la modification (600) d'une couleur de l'indication (3) en fonction d'une distance entre le moyen de locomotion (10) et le POI.

9. Procédé selon l'une des revendications précédentes, comprenant en outre :
- la détermination d'une multiplicité de POI et la fourniure d'un indication (3) commune concernant plusieurs POI
- sous réserve qu'une multiplicité prédéfinie de POI soit atteinte à une proximité prédéfinie du moyen de locomotion (10) et/ou
- que les POI soient placés dans des points cardinaux suffisamment coïncidents les uns avec les autres par rapport au moyen de locomotion (10).

10. Système d'assistance à la conduite destiné à informer un utilisateur (1) d'un moyen de locomotion (10), comprenant
- une entrée de données (11),
- une unité d'analyse (8) et
- une sortie de données (12),
- l'unité d'analyse (8) étant agencée
- pour déterminer, au moyen de l'entrée de données (11), un Point of Interest, appelé ci-dessous « POI », et
- pour, au moyen de la sortie de données (12), fournir à l'utilisateur (1), au moyen d'un équipement d'affichage (13) du moyen de locomotion (10), une indication (3) située virtuellement dans un plan de la surface de la route et concernant la proximité par rapport au POI.

11. Système d'assistance à la conduite selon la revendication 10, qui est agencé pour réaliser un procédé selon l'une des revendications précédentes 1 à 9.

12. Produit de programme d'ordinateur, comprenant des instructions qui, quand elles sont exécutées sur un processeur (8) programmable d'un système d'assistance à la conduite (13) selon l'une des revendications 10 ou 11, amènent le processeur (8) à réaliser les étapes d'un procédé selon l'une des revendications 1 à 9.

13. Suite de signaux représentant des instructions qui, quand elles sont exécutées sur un processeur (8) programmable d'un système d'assistance à la conduite (13) selon l'une des revendications 10 ou 11, amènent le processeur (8) à réaliser les étapes d'un procédé selon l'une des revendications 1 à 9.

14. Moyen de locomotion, comprenant un système d'assistance à la conduite (13) selon l'une des revendications précédentes 10 ou 11.
